# EUROPÄISCHE PATENTANMELDUNG

(11) **EP 0 613 832 A1**
(43) Veröffentlichungstag der Anmeldung: **07.09.1994**
(21) Anmeldenummer: 94810114.2
(22) Anmeldetag: 23.02.1994
(51) Int. Cl.: B65D 75/34, B32B 27/20

(54) **Durchdrückpackung**

(30) Priorität: 04.03.1993 CH 645/93
(71) Anmelder: ALUSUISSE-LONZA SERVICES AG, CH-8034 Zürich (CH)
(72) Erfinder: Roulin, Monique, CH-8200 Schaffhausen (CH); Nägeli, Hans-Rudolf, CH-8212 Neuhausen (CH); Christel, Andreas, Piscataway, N.J. 08854 (US)

(57) **Zusammenfassung**

Metallfolienfreie Deckelfolie für die Bedeckelung von Durchdrückpackungen, wobei die Deckelfolie wenigstens eine Folie aus thermoplastischem Kunststoff auf Polyolefin-Basis oder Polyester-Basis enthält, und der thermoplastische Kunststoff 5 bis 50 Gew.-% Füllstoffe aufweist. Die Deckelfolie kann gegebenenfalls mit Hilfe einer Siegelschicht auf ein Bodenteil einer Durchdrück- oder Blisterpackung aufgesiegelt werden. Die Deckelfolie ist derart inelastisch, dass der Packungsinhalt durch die Folie durchgedrückt werden kann.

## Beschreibung

Vorliegende Erfindung betrifft eine metallfolienfreie Deckelfolie für Durchdrückpackungen und eine Verwendung der metallfolienfreien Deckelfolie.

Es ist bekannt, Durchdrückpackungen oder sogenannte Blisterpackungen, mit einem vollflächigen Deckelmaterial zu überdecken und das Deckelmaterial anzusiegeln. Die Durchdrückpackung zeichnet sich durch ein einzelnes oder eine Mehrzahl von einzelnen Fächern aus, in denen beispielsweise feste Formkörper oder geformte feste Zubereitungen oder pharmazeutische Produkte, wie Tabletten oder Dragées eingelagert sind. Soll nun aus einer Durchdrückpackung ein einzelner Gegenstand, z.B. eine Tablette entnommen werden, wird der Boden eingedrückt und die Tablette ihrerseits durchdrückt das Deckelmaterial. In der Regel ist das Deckelmaterial aus einer Aluminiumfolie oder einem Aluminiumfolienverbund hergestellt. Die Aluminiumfolie ist ein bevorzugtes Material für Deckel von Blistern, da bei den gewählten Dicken der Deckelmaterialien relativ geringe Bruchkräfte notwendig sind, und somit die benötigte Durchstossenergie gering ist und das Aluminium im wesentlichen keine Elastizität zeigt. In der Regel ist der Boden der Durchdrückpackung aus Kunststoff wie beispielsweise PVC, Polyamid, Polyolefin, Polyethylenterephthalaten und Verbunden, enthaltend wenigstens einen dieser Werkstoffe, und enthaltend gegebenenfalls auch eine Aluminiumfolie, hergestellt.

Ein Nachteil dieser bekannten Durchdrückpackungen liegt darin, dass es sich um einen Materialmix von Kunststoff und Aluminium handelt, der bei der Entsorgung getrennt werden muss, damit einerseits die Kunststoffabfälle und andererseits die Aluminiumabfälle sortenrein rezykliert werden können.

Aufgabe vorliegender Erfindung ist es, ein Deckelmaterial zur Verfügung zu stellen, dessen Materialien der gleichen Werkstoffgruppe, und insbesondere der gleichen oder ähnlichen Gruppe der thermoplastischen Kunststoffe zugehörig sind wie das Material des Bodenteils, und das alle die positiven Eigenschaften des Aluminiums ebenfalls aufweist oder weitgehend ebenfalls aufweist.

Erfindungsgemäss wird das durch eine Deckelfolie erreicht, enthaltend wenigstens eine Folie aus thermoplastischen Kunststoffen auf Polyolefin-Basis oder Polyester-Basis, wobei der thermoplastische Kunststoff 5 bis 50 Gew.-%, bezogen auf den thermoplastischen Kunststoff, Füllstoffe aufweist.

In zweckmässiger Ausführungsform stellt die Folie aus thermoplastischem Kunststoff eine Monofolie oder einen Verbund dar, enthaltend wenigstens eine Monofolie, wobei die Monofolien jeweils auf Polyolefin-Basis oder Polyester-Basis sind.

Beispiele von thermoplastischen Kunststoffen auf Polyolefin-Basis sind Polyethylene, z.B. Polyethylen hoher Dichte (HDPE, Dichte grösser als 0,944g/cm3), Polyethylen mittlerer Dichte (MDPE, Dichte 0,926-0,940 g/cm³), lineares Polyethylen mittlerer Dichte (LMDPE, Dichte 0,926-0,940 g/cm³), Polyethylen niedriger Dichte (LDPE, Dichte 0,910-0,925 g/cm³) und lineares Polyethylen niedriger Dichte (LLDPE, Dichte 0,916-0,925 g/cm³), Polypropylene, wie axial oder biaxial orientiertes Polypropylen oder gegossenes (cast) Polypropylen, amorphes oder kristallines Polypropylen oder Gemische davon, ataktisches oder isotaktisches Polypropylen oder Gemische davon, Poly-1-buten, Poly-3-methylbuten, Poly-4-methylpenten und Copolymere davon, wie z.B. von Polyethylen mit Vinylacetat, Vinylalkohol, Acrylsäure, z.B. Ionomerharze, wie Copolymerisate von Ethylen mit bis zu etwa 11 % Acrylsäure, Methacrylsäure, Acrylestern, Tetrafluorethylen oder Polypropylen, sowie statistische Copolymere, Block-Copolymere, Mischungen oder Olefinpolymer-Elastomer-Mischungen. Bevorzugt ist Polyethylen hoher Dichte (HDPE), niedriger Dichte (LDPE), sowohl als Homo- als auch als Copolymerisate, Polypropylen oder Copolymere davon und Mischungen von Polypropylen und Polyethylenen. Besonders bevorzugt sind Mischungen von Polypropylen mit 10 bis 50 Gew.-%, bezogen auf das Polypropylen, an Polyethylenen, wie HDPE.

Thermoplaste auf Polyester-Basis sind beispielsweise Polyalkylenterephthalate oder Polyalkylenisophthalate mit Alkylengruppen oder -resten mit 2 bis 10 Kohlenstoffatomen oder Alkylengruppen mit 2 bis 10 C-Atomen, die wenigstens durch ein -0- unterbrochen sind, wie z.B. Polyethylenterephthalat, Polypropylenterephthalat, Polybutylenterephthalat (Polytetramethylenterephthalat), Polydecamethylenterephthalat, Poly-1,4-cyclohexyldimethylolterephthalat oder Polyethylen-2,6-naphthalen-dicarboxylat oder Polyalkylenterephthalat- und Polyalkylenisophthalat-Mischpolymere, wobei der Anteil an Isophthalat z.B. 1 bis 10 Mol-% beträgt, Mischpolymere und Terpolymere, sowie Blockpolymere und gepfropfte Modifikationen oben genannter Stoffe.

Andere Thermoplaste auf Polyester-Basis sind Copolymere der Terephthalsäure und einer weiteren Polycarboxylsäure mit wenigstens einem Glykol. Zweckmässig sind dabei die Copolyester der Terephthalsäure, Ethylenglykol und einem zusätzlichen Glykol. Bevorzugt sind glykolmodifizierte Polyester, die der Fachwelt als PETG bekannt sind.

Zweckmässige Thermoplaste auf Polyester-Basis sind Polylalkylenterephthalate mit Alkylengruppen oder -resten mit 2 bis 10 Kohlenstoffatomen und Polylalkylenterephthalate mit Alkylengruppen oder -resten mit 2 bis 10 Kohlenstoffatomen, die durch ein oder zwei -0- unterbrochen sind.

Bevorzugte Thermoplaste auf Polyester-Basis sind Polylalkylenterephthalate mit Alkylengruppen oder -resten mit 2 bis 4 Kohlenstoffatomen und ganz besonders bevorzugt sind Polyethylenterephthalate. Zu diesen Polyethylenterephthalaten sind auch A-PET, PETP und das genannte PETG oder G-PET zu zählen.

Bevorzugte Folien aus thermoplastischen Kunststoffen sind solche enthaltend Thermoplaste auf Olefinbasis und besonders bevorzugt solche aus Polyethylen, wobei unter den Polyethylenen wiederum das Hochdruck-Polyethylen (HDPE), Polypropylen oder Copolymere davon besonders bevorzugt sind. Bevorzugt sind auch Polyester sowie Mischungen von Polypropylen und Polyethylen, beispielsweise aus Polypropylen und, bezogen auf das Polypropylen, 10 bis 50 Gew.-% Polyethylen, wie HDPE.

Mit den Folien aus den thermoplastischen Kunststoffen können z.B. Monofilme oder -schichten und Verbunde von zwei oder mehreren Filmen oder Schichten aus den genannten Polymeren und aus Polymergemischen oder Misch-, Block-, Pfropf- oder Copolymeren der genannten Polymeren, umfasst sein.

Die Polymere oder die Kunststoffolien können mit Zusätzen, wie z.B. Stabilisatoren, Weichmachern, Pigmenten, Verarbeitungshilfsmitteln etc. versehen sein.

Die Dicke der einzelnen Kunststoffolien, die einen der obigen Kunststoffolienverbunde bilden, kann z.B. für Folien aus Thermoplasten auf Esterbasis zwischen 6 und 100 µm, zweckmässig zwischen 10 und 80 µm, bevorzugt zwischen 10 und 60 µm und besonders bevorzugt zwischen 12 und 40 µm liegen oder kann für Folien aus Thermoplasten auf Olefin-Basis z.B. von 3 bis 140 µm, zweckmässig 5 bis 120 µm, besonders zweckmässig 10 bis 100 µm, vorteilhaft 20 bis 80 µm und bevorzugt von 30 bis 60 µm Dicke liegen.

Die Dicke einer einzelnen Kunststoffolie bei der Verwendung als Monofolie kann z.B. zwischen 10 und 100 µm, zweckmässig 10 bis 60 und bevorzugt zwischen 12 und 40 µm für Folien aus Thermoplasten auf Polyester-Basis und z.B. 3 bis 140 µm, zweckmässig von 10 und 130 µm, zweckmässig 40 bis 120 µm und bevorzugt zwischen 40 und 100 µm für Folien aus Thermoplasten auf Polyolefin-Basis liegen.

Die Deckelfolie nach vorliegender Erfindung hat zweckmässig eine Gesamtdicke von etwa 10 bis 200 µm, bevorzugt von 40 bis 140 µm und insbesondere von 40 bis 120 µm.

Erfindungsgemäss enthält die Deckelfolie 5 bis 50 Gew.-%, bevorzugt 20 bis 45 Gew.-%, und besonders bevorzugt 40 bis 45 Gew.-%, bezogen auf den thermoplastischen Kunststoff der Folie, Füllstoffe. Beispiele von solchen Füllstoffen sind Gläser, Calziumcarbonate, Kreide, Calzit, gefälltes Calziumcarbonat, Calcium-Magnesium-Carbonate, Dolomit, Silicate, Kreide, Bariumsulfate, Russ, Schiefermehl, Schwerspat, Kieselerde, Tonerdehydrat, Kaolin, Diatomit, Glimmer, Talkum oder Gemische enthaltend wenigstens einen oder mehrere dieser genannten Stoffe. Die Füllstoffe weisen vorteilhaft einen Partikeldurchmesser von 1 bis 15 µm und insbesondere 1 bis 6 µm auf. Die Füllstoffpartikel sind zweckmässig faserförmig, kugelig oder blättchenförmig. Bevorzugte Füllstoffe sind Talkum, Kreide und Calciumcarbonate.

Die Folie kann auch pigmentiert werden. Je nach Art und Anteil des Pigmentes kann die Gebrauchstüchtigkeit der Folie durch die Pigmente noch erhöht werden. Beispiele von Pigmenten sind anorganische und organische Pigmente. Beispiele solcher anorganischer Pigmente sind z.B. Titandioxid, Zinkoxid oder Bariumoxid. Geeignet sind auch organische Pigmente, wie z.B. Buntpigmente. Geeignet sind Anteile an Pigmenten im Bereich von bis zu 20 Gew.-% und besonders 5 bis 20 Gew.-%, bezogen auf den thermoplastischen Kunststoff.

Die Folien sind herstellbar durch Erzeugung eines Compounds aus dem thermoplastischen Kunststoff, allfälligen Zuschlagsstoffen, dem Füllstoff und gegebenenfalls den Pigmenten sowie den weiteren, allenfalls vorzusehenden, Verarbeitungshilfsmitteln, Stabilisatoren etc. Aus diesem Compound kann dann die Folie z.B. durch Cast-Extrusion, Coextrusion oder Blasextrusion hergestellt werden. Es ist auch möglich, mit zwei oder mehr Folien einen Verbund zu erzeugen. Dies kann beispielsweise durch Beschichten, Extrusionsbeschichtung, Coextrusionsbeschichtung oder durch Blasextrusion erfolgen.

Da Durchdrückpackungen sehr oft für die Aufnahme von empfindlichen Gütern vorgesehen sind, kann es zweckmässig sein, sowohl den Bodenteil als auch das Deckelmaterial undurchdringlich oder schwer durchdringbar für Gase, Gerüche, Aromen, Feuchtigkeit und Nässe zu machen oder diese soweit bereits vorhandenen Eigenschaften zu verstärken. Zweckmässig wird das mit einer Permeabilitätssperre oder Sperr- oder Barriereschicht erreicht. Geeignet sind z.B. keramische Sperrschichten sowie Kunststoff-Sperrschichten.

Es können durch Vakuumdünnschichtverdampfung erzeugte keramische Schichten von Oxiden und/oder Nitriden von Metallen und/oder Halbmetallen angewendet werden.

Die keramische Schicht wird zweckmässig durch ein Vakuumdünnschichtverfahren aufgebracht, wobei physikalische Beschichtungsverfahren (PVD) bzw. chemische Beschichtungsverfahren (CVD) mit Plasmaunterstützung zum Einsatz kommen können. Bevorzugt werden physikalische Beschichtungsverfahren, insbesondere auf der Basis von Elektronenstrahlverdampfen oder Widerstandsheizen oder induktivem Heizen aus Tiegeln. Besonders bevorzugt ist das Elektronenstrahlverdampfen. Die beschriebenen Verfahren können reaktiv und/oder mit Ionenunterstützung gefahren werden.

Die Dicke der keramischen Schicht kann von 5 bis 1000 nm betragen, wobei Schichtdicken von 10 bis 200 nm bevorzugt und von 40 bis 150 nm besonders bevorzugt sind.

Als keramische Schicht können die Oxide und/oder Nitride von Metallen und/oder Halbmetallen, z.B. diejenigen des Siliciums, des Aluminiums, des Eisens, Nickels, Chroms, Tantals, Molybdäns, Magnesiums, Bleis oder Mischungen daraus angewendet werden. Damit umfasst sind auch die Oxinitride der genannten Metalle oder Halbmetalle.

Als keramische Schichten sind die Siliciumoxide oder Aluminiumoxide zweckmässig. Die Siliciumoxide können die allgemeine Formel SiOₓ, wobei x zweckmässig eine Zahl von 1 bis 2 darstellt, bevorzugt von 1,1 bis 1,9 und insbesondere von 1,1 bis 1,7 darstellt, aufweisen. Die Aluminiumoxide können die Formel Al_{y}O_{z}, wobei y/z z.B. eine Zahl von 0,2 bis 1,5 und bevorzugt von 0,65 bis 0,85 darstellt, aufweisen.

Besonders bevorzugt sind Permeabilitätssperrschichten in Form einer 10 bis 500 nm dicken keramischen Schicht eines Siliciumoxides der allgemeinen Formel SiOₓ, wobei x eine Zahl von 1,1 bis 1,7 darstellt oder eines Aluminiumoxides der allgemeinen Formel Al_{y}O_{z}, wobei y/z eine Zahl von 0,2 bis 1,5 darstellt.

Die Permeabilitätssperrschicht in Form einer keramischen Schicht wird in der Praxis auf wenigstens einer Seite wenigstens einer Kunststoffolie durch eines der genannten Verfahren aufgebracht. Die Kunststoffolie dient demnach als Substrat auf dem die keramische Schicht abgeschieden wird. Es kann die Folie aus thermoplastischem Kunststoff als Substrat vorgesehen werden, oder es kann eine weitere Kunststoffolie als Substrat vorgesehen werden.

Entsprechend den Anforderungen an die Sperr- oder Barrierewirkung der Permeabilitätssperre, kann die Dicke und Anzahl von keramischen Schichten gewählt werden.

Es kann z.B. die weitere Kunststoffolie oder die Folie aus thermoplastischem Kunststoff einseitig mit einer keramischen Schicht beschichtet werden, und auf die keramische Schicht kann die Folie aus thermoplastischem Kunststoff, respektive die weitere Kunststoffolie aufgebracht werden.

Mit dieser letzten Massnahme wird erreicht, dass die keramische Schicht oder Schichten während der Herstellung, Verarbeitung, Lagerung und dem Transport der Deckelfolie nicht beschädigt werden.

Es können auch Kunststoff-Sperrschichten vorgesehen werden. Es handelt sich dabei beispielsweise um Folien in einer Dicke von z.B. 5 bis 100 µm aus Polymeren, die besonders gas- und wasserdampfdicht sind. Besonders günstig verhalten sich z.B. Polyvinylidenchloride, Polyolefine, Ethylenvinylalkohol (EVOH), Polyvinylchloride, Acrylnitrin-Copolymere oder biaxial gestrecktes Polyethylenterephthalat, die auf die Folie aus thermoplastischem Kunststoff aufgebracht werden.

Die derart ausgerüsteten Deckelfolien weisen eine hohe Sperrwirkung gegenüber chemischen, physikalischen oder mikrobiellen Einflüssen auf und schützen das verpackte Gut vor Oxidation, Strahlung oder Verderb. Insbesondere sind die Sperreigenschaften gegenüber Luft, Sauerstoff und Wasserdampf, Feuchtigkeit, Aroma und Fremdgerüchen hervorragend.

Alle in dieser Beschreibung gennanten Folien und Verbunde daraus können ungereckt, monoaxial oder biaxial gereckt angewendet werden.

Die Deckelfolien nach vorliegender Erfindung können zumindest aussen wenigstens eine bedruckte, konterbedruckte oder eingefärbte Schicht eines Materials, wie z.B. eine Kunststoffolie, aufweisen oder die Deckelfolien können als solche bedruckt oder konterbedruckt sein, wobei der Druck auch mit einem Schutzlack abgedeckt sein kann.

Auf wenigstens einer Seite und insbesondere auf wenigstens der zum Bodenteil gerichteten Seite der erfindungsgemässen Deckelfolie, wenigstens an den Randbereichen oder den Randflanschen und den Stegbereichen, bezogen auf den Bodenteil, zur Auflage und dichtenden Verbindung mit dem Bodenteil, oder auch auf der ganzen nach innen zu liegen kommenden Fläche der Deckelfolie, können Siegelschichten, z.B. als Lacke oder Siegelfolien, vorgesehen sein. Die Siegelschichten können beispielsweise aus Ionomeren, LLDPE, LDPE, MDPE, HDPE, Polypropylen und Polyethylenterephthalat bestehen oder diese Materialien enthalten und in Folien- oder Lackform vorliegen. Ionomere oder ionenhaltige Polymere mit typischen Ionomereigenschaften sind thermoplastische Copolymere von Olefinen mit carboxylhaltigen Monomeren, von denen ein Teil als freie Carboxylgruppen vorliegen und der Rest mit Metallkationen gebunden ist, so dass eine gewisse Quervernetzung erreicht wird. Bevorzugte Siegelschichten bestehen aus oder enthalten Mischungen aus Polyolefinen, wie Mischungen von Polyethylenen und Polypropylenen und beispielsweise sind dies Mischungen von Polypropylen mit 10 bis 50 Gew.-%, bezogen auf das Polypropylen, Polyethylen. Siegelbare Folien können eine Dicke von 3 bis 140 µm aufweisen. Es können auch eine oder mehrere Schichten z.B. eines Siegellacks oder Heissiegellacks durch eine Lackanwendung auf die Deckelfolie, beispielsweise in einer Dicke von 1 bis 10 µm, aufgebracht werden.

Siegelfolien können beispielsweise durch ein Extrusionsverfahren auf die Deckelfolie aufgebracht werden oder Lacke können auf die Deckelfolie aufgetragen werden.

Die Deckelfolie kann auch direkt als solche aufgesiegelt werden, d.h. ohne Verwendung einer Siegelschicht.

Gegebenenfalls können Folien- oder Verbundoberflächen zur Erhöhung der Oberflächenspannung, vorzugsweise durch eine Plasma- oder Flammvorbehandlung oder eine Koronabehandlung behandelt werden.

Demnach können erfindungsgemässe Deckelfolien beispielsweise folgende Schichten enthalten:
a) eine Monofolie aus einem thermoplastischen Kunststoff auf Polyolefin-Basis oder Polyester-Basis
   oder
a') einen Verbund enthaltend wenigstens eine Folie aus einem thermoplastischen Kunststoff auf Polyolefin-Basis oder Polyester-Basis
   und bevorzugt
b) eine Siegelschicht in Form eines Siegellackes oder einer Siegelfolie auf einer oder beiden Seiten von a) oder a').

Auf der Schicht a) resp. a') kann ein Druck, ein Druck mit Schutzlack, ein Schutzlack, eine weitere Kunststoffschicht, die eine keramische Schicht trägt oder eine Kunststoffsperrschicht und/oder eine weitere Kunststoffschicht, z.B. eine Siegelschicht, angeordnet sein.

In der Regel können als Basismaterial für die Bodenteile der Durchdrück- oder Blisterpackungen z.B. Polypropylen oder Polyethylenterephthalate und Copolymeren davon und insbesondere PETP verwendet werden. Wird Polypropylen verwendet, kann diesem z.B. bis zu 50 Gew.-%, und insbesondere 30 Gew.-%, HDPE beigefügt werden. Entsprechend diesen Basismaterialien für die Durchdrückpackungen kann die Deckelfolie vorzugsweise aus gleichem oder ähnlichem thermoplastischen Kunststoff aufgebaut sein. Solche Verpackungen aus den genannten Kunststoffolien resp. Kunststoffolienverbunden sind insbesondere geeignet zur sortenreinen Regranulation und zur Wiederverwertung in neuen Kunststoffprodukten.

Dies trifft insbesondere zu für Durchdrückpackungen und den Deckelfolien dazu, die Sperrschichten aus keramischen Materialien enthalten. Die äusserst geringen Mengen, der zur Bildung der Permeabilitätssperrschicht aufgebrachten Oxide oder Nitride von Metallen und/oder Halbmetallen wirken sich bei der Wiederverwertung nicht negativ aus.

Die Deckelfolie nach vorliegender Erfindung muss die Spannungen einer Veredelungsmaschine aufnehmen können. Deshalb sollte die Deckelfolie eine Festigkeit von über 20 MPa und eine maximale Dehnung von unter 800 % aufweisen.

Die äussere Oberfläche der Deckelfolie soll glatt sein, um beispielsweise einen schönen Druck aufbringen zu können. Die geforderte Oberflächenqualität kann beispielsweise bei der Extrusion über die Rauhigkeit der Walze oder mittels einer Nachlackierung erhalten werden.

Wie vorstehend erwähnt, wird die Deckelfolie beispielsweise durch Siegelung trennfest mit dem Bodenteil verbunden. Demzufolge muss die Deckelfolie siegeltemperaturbeständig sein, wobei die Siegeltemperaturen beispielsweise im Bereich von 150°C bis 200°C liegen können. Durch die Siegelung wird jedes Fach oder Vertiefung im Bodenteil randständig umsiegelt und dicht verschlossen. Der Inhalt eines Faches ist dadurch rundum gegen äussere Einflüsse geschützt. Die Siegelung muss so stark gewählt werden, dass der Packungsinhalt durch die Deckelfolie hindurch durch Durchdrücken des Inhaltes entnommen werden kann, ohne dass die Siegelung bricht.

Die Deckelfolie kann beispielsweise als Rollenware, als Bögen oder in Form von Einzeldeckeln gefertigt werden. Die Deckelfolien in Form von Rollenware oder Bogenware kann durch z.B. Ausschneiden, Ausstanzen oder Trennen zu einzelnen Deckeln verarbeitet werden. Zweckmässig entspricht die Deckelform in der Draufsicht dann der Bodenform.

Vorliegende Erfindung betrifft auch die Verwendung der metallfolienfreien Deckelfolie für Durchdrückpackungen oder Blisterpackungen und insbesondere für Deckel von Durchdrückpackungen oder Blisterpackungen.

Die erfindungsgemässe Deckelfolie ist derart inelastisch, dass beim Durchdrücken des Inhaltes eines Faches durch den Deckel die Deckelfolie oder aufplatzt und den Inhalt freigibt.

## Patentansprüche

1. Metallfolienfreie Deckelfolie für Durchdrückpackungen, dadurch gekennzeichnet, dass die Deckelfolie wenigstens eine Folie aus thermoplastischem Kunststoff auf Polyolefin-Basis oder Polyester-Basis enthält, wobei der thermoplastische Kunststoff 5 bis 50 Gew.-%, bezogen auf den thermoplastischen Kunststoff, Füllstoffe aufweist.

2. Metallfolienfreie Deckelfolie nach Anspruch 1, dadurch gekennzeichnet, dass die Folie aus thermoplastischem Kunststoff eine Monofolie darstellt oder einen Verbund darstellt, enthaltend wenigstens eine Monofolie aus thermoplastischem Kunststoff auf Polyolefin-Basis oder Polyester-Basis.

3. Metallfolienfreie Deckelfolie nach Anspruch 1, dadurch gekennzeichnet, dass der thermoplastische Kunststoff 20 bis 45 Gew.-% Füllstoffe enthält.

4. Metallfolienfreie Deckelfolie für Durchdrückpackungen, dadurch gekennzeichnet, dass die Folie aus thermoplastischem Kunststoff auf Polyolefin-Basis eine Mischung von Polypropylen mit 10 bis 50 Gew.-%, bezogen auf das Polypropylen, an Polyethylenen, insbesondere HDPE, enthält oder daraus besteht.

5. Metallfolienfreie Deckelfolie für Durchdrückpackungen, dadurch gekennzeichnet, dass die Deckelfolie auf wenigstens einer Seite eine Siegelschicht enthält.

6. Metallfolienfreie Deckelfolie nach Anspruch 1, dadurch gekennzeichnet, dass die Folie Gläser, Calciumcarbonate, Kreide, Calcit, gefälltes Calciumcarbonat, Calcium-Magnesium-Carbonate, Dolomit, Silicate, Bariumsulfate, Russ, Schiefermehl, Schwerspat, Kieselerde, Tonerdehydrat, Kaolin, Dietomit, Glimmer, Talkum oder Gemische davon als Füllstoff enthält.

7. Metallfolienfreie Deckelfolie für Durchdrückpackungen, dadurch gekennzeichnet, dass die Füllstoffe einen Partikeldurchmesser von 1 bis 15 µm aufweisen.

8. Verwendung der metallfolienfreien Deckelfolie nach Anspruch 1 für Durchdrückpackungen oder Blisterpackungen und insbesondere für Deckel von Durchdrückpackungen oder Blisterpackungen.
